# EUROPÄISCHE PATENTSCHRIFT

(11) **EP 3 492 670 B1**
(45) Veröffentlichungstag und Bekanntmachung des Hinweises auf die Patenterteilung: **24.06.2020**
(21) Anmeldenummer: 18204664.9
(22) Anmeldetag: 06.11.2018
(51) Int. Cl.: E04F 21/08, G01B 7/16, G01L 1/20

(54) **VORRICHTUNG ZUM EINBLASEN VON DÄMMSTOFF**
DEVICE FOR INJECTING INSULATING MATERIAL
DISPOSITIF DE SOUFFLAGE DE MATÉRIAU ISOLANT

(30) Priorität: 01.12.2017 AT 509932017
(43) Veröffentlichungstag der Anmeldung: 05.06.2019
(73) Patentinhaber: ISOCELL GmbH & Co KG, 5202 Neumarkt am Wallersee (AT)
(72) Erfinder: Engl, Manfred, 5202 Neumarkt (AT)
(74) Vertreter: Hübscher & Partner Patentanwälte GmbH

(56) Entgegenhaltungen:
- EP-A1- 2 333 198
- DE-A1-102008 003 796
- DE-A1-102008 031 683
- DE-U1- 20 106 489

## Beschreibung

Die Erfindung bezieht sich auf eine Vorrichtung zum Einblasen von Dämmstoff in einseitig offene Dämmstoffkammern eines Wandelements mit einer zumindest eine Dämmstoffkammer abdeckenden Einblasplatte, die auf der den Dämmstoffkammern zugekehrten Unterseite eine luftdurchlässige Decklage mit wenigstens einer Einblasöffnung für den Dämmstoff aufweist, und mit einer an eine Auswerteeinheit angeschlossenen Erfassungseinrichtung für den Verlauf der die Dämmstoffkammern umfangsseitig begrenzenden Stegen.

Zum Einblasen von Dämmstoff in Dämmstoffkammern von Wandelementen ist es bekannt (EP 2 333 198 A1), die einseitig offenen Dämmstoffkammern mit einer Einblasplatte abzudecken, die auf der den offenen Dämmstoffkammern zugekehrten Unterseite mit einer luftdurchlässigen Decklage, beispielsweise aus einem elastischen, offenporigen Schaumstoff versehen ist. Der Dämmstoff wird durch wenigstens eine Einblasöffnung durch die zumindest eine Dämmstoffkammer abdeckende Einblasplatte in die jeweilige Dämmstoffkammer eingeblasen, wobei die Förderluft durch die luftdurchlässige Decklage der Einblasplatte in einer für eine gleichmäßige Befüllung ausreichend gleichmäßigen Verteilung aus der Dämmstoffkammer abgeführt werden kann. Voraussetzung für eine gleichmäßige Befüllung der Dämmstoffkammern mit Dämmstoff in einer vorgegebenen Fülldichte ist allerdings, dass die in die Dämmkammern eingebrachte Dämmstoffmenge an das jeweilige Volumen der Dämmstoffkammern angepasst ist. Zu diesem Zweck ist eine Einrichtung mit Sensoren zum Erfassen des Verlaufs der die Dämmstoffkammern umfangsseitig begrenzenden Stege und eine Auswerteeinheit für die ermittelten Sensordaten vorgesehen, sodass anhand der sich aus dem Stegverlauf ergebenden Grundfläche der Dämmstoffkammern bei vorgegebener Steghöhe das jeweilige Kammervolumen bestimmt und in Abhängigkeit vom ermittelten Kammervolumen die für jede Dämmstoffkammer einzublasende Dämmstoffmenge vorgegeben werden kann. Nachteilig ist allerdings, dass der Stegverlauf der zu befüllenden Dämmstoffkammern in einem gesonderten Messvorgang vor dem Aufsetzen der Einblasplatte auf die zu befüllenden Dämmstoffkammern vergleichsweise aufwendig mithilfe entsprechender Sensoren, beispielsweise Laserdioden, ermittelt werden muss.

Der Erfindung liegt somit die Aufgabe zugrunde, eine Vorrichtung zum Einblasen von Dämmstoff in einseitig offene Dämmstoffkammern eines Wandelements so auszugestalten, dass mit einfachen Mitteln eine ausreichend genaue Bestimmung der Füllvolumen der zu befüllenden Dämmstoffkammern ermöglicht wird, ohne das Wandelement vor dem Aufbringen der Einblasplatte auf die zu befüllenden Dämmstoffkammern aufwendig vermessen zu müssen.

Ausgehend von einer Vorrichtung der eingangs geschilderten Art löst die Erfindung die gestellte Aufgabe dadurch, dass die Erfassungseinrichtung für den Stegverlauf der Dämmstoffkammern wenigstens zwei Scharen von auf der Unterseite der Einblasplatte vorgesehenen Folienpotentiometern umfasst, die scharenweise in unterschiedlichen Richtungen verlaufen.

Folienpotentiometer sind Spannungsteiler, deren elektrisch wirksame Schichten mit Abstand voneinander angeordnet sind und bei einer örtlichen Druckbelastung zu einem von der Belastungsstelle abhängigen Spannungsabgriff führen, sodass diese Folienpotentiometer vorteilhaft als lineare Wegsensoren eingesetzt werden können. Da im Allgemeinen davon ausgegangen werden kann, dass die Stege der Dämmstoffkammern gerade verlaufen, genügen zwei Messpunkte zur Erfassung eines Stegverlaufs. Durch die erfindungsgemäß vorgesehenen Scharen von scharenweise in unterschiedlichen Richtungen verlaufenden Folienpotentiometern werden somit beim Aufsetzen der Einblasplatte auf die gegenüber der Einblasplatte offenen Dämmstoffkammern wenigstens zwei Folienpotentiometer durch die freien Stirnseiten jedes Stegs der Dämmstoffkammern einer Druckbelastung ausgesetzt, die einen örtlichen Messpunkt bestimmt, sodass anhand der durch die Folienpotentiometer erfassten Messpunkte die Grundflächen der zu befüllenden Dämmstoffkammern mit einer für die Bestimmung der jeweils erforderlichen Füllmenge ausreichenden Genauigkeit in der Auswerteeinheit ermittelt werden kann. Die Anordnung der Folienpotentiometer vereinfacht sich, wenn zusätzlich davon ausgegangen werden kann, dass die Grundfläche der Dämmstoffkammern rechtwinkelig ist, was im Allgemeinen der Fall ist.

Bei in ihrer Grundform rechteckigen Einblasplatten ergeben sich vorteilhafte Konstruktionsvoraussetzungen, wenn eine Schar der Folienpotentiometer parallel zur Breitseite der Einblasplatte und die Folienpotentiometer der anderen Schar quer dazu verlaufen, weil sich in diesem Fall bei rechtwinkeligen, zumindest angenähert bezüglich der Längs- und Breitseite der Einblasplatte ausgerichteten Dämmstoffkammern die Erfassungsbedingungen für die Stegverläufe besonders einfach gestalten.

Damit die druckempfindlichen Folienpotentiometer beim Aufsetzen der Einblasplatte auf die offenen Dämmstoffkammern ansprechen, können sie auf der den Dämmstoffkammern zugekehrten Unterseite der luftdurchlässigen Decklage angeordnet sein, was jedoch den Nachteil mit sich bringt, dass sie dann dem doch vergleichsweise rauen Betrieb solcher Vorrichtungen ausgesetzt sind. Günstigere Konstruktionsbedingungen ergeben sich, wenn die Folienpotentiometer geschützt zwischen der luftdurchlässigen Decklage und der Einblasplatte angeordnet werden. Eine solche Maßnahme setzt allerdings eine luftdurchlässige Decklage voraus, über die der Auflagedruck zwischen der Einblasplatte und den Stegen der Dämmstoffkammern örtlich begrenzt auf die Folienpotentiometer übertragen werden kann. Dies gelingt in einfacher Art, wenn die luftdurchlässige Decklage eine offenporige Lage aus Weichschaumstoff bildet, die außerdem für einen guten Abschluss der Dämmstoffkammern beim Aufsetzen der Einblasplatte sorgt.

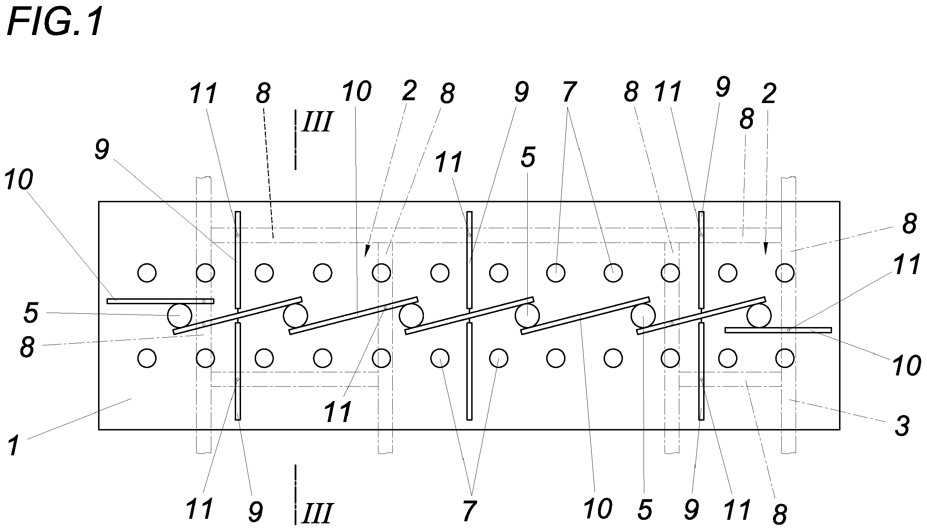

In der Zeichnung ist der Erfindungsgegenstand beispielsweise dargestellt. Es zeigen
- Fig. 1: erfindungsgemäße Einblasplatte ohne luftdurchlässige Decklage in einer Draufsicht auf die Unterseite mit einem strichpunktiert angedeuteten, beispielhaften Stegverlauf der zu befüllenden Dämmstoffkammern,
- Fig. 2: eine der Fig. 1 entsprechende Darstellung der Einblasplatte mit einem gegenüber der Fig. 1 abgewandelten Verlauf der Stege und
- Fig. 3: einen Schnitt durch die Einblasplatte entlang der Linie III-III der Fig. 1 in einem größeren Maßstab.

Die in ihrer Grundform rechteckige Einblasplatte 1 einer erfindungsgemäßen Vorrichtung zum Einblasen von Dämmstoff in einseitig offene Dämmstoffkammern 2 eines Wandelements 3 ist mit an einen Förderschlauch 4 angeschlossenen Einblasöffnungen 5 versehen, durch die Dämmstoff, beispielsweise in Faserform, in die Dämmstoffkammern 2 eingeblasen wird. Auf der den offenen Dämmstoffkammern 2 zugekehrten Unterseite der Einblasplatte 1 ist eine luftdurchlässige Decklage 6 aus einem offenporigen Weichschaumstoff vorgesehen. Die auf die Dämmstoffkammern 2 aufgesetzte Einblasplatte 1 deckt somit zumindest eine der Dämmstoffkammern 2 ab, in die der Dämmstoff eingeblasen wird. Die Förderluft mit deren Hilfe der Dämmstoff in die Dämmstoffkammern 2 eingeblasen wird, wird über die luftdurchlässige Decklage 6 aus der Dämmstoffkammer 2 abgezogen. Die Einblasplatte 1 ist zu diesem Zweck mit Luftauslassöffnungen 7 versehen.

Um die einzelnen Dämmstoffkammern 2 in einer vorgegebenen Dichte mit dem Dämmstoff füllen zu können, muss die eingeblasene Dämmstoffmenge an das Aufnahmevolumen der einzelnen Dämmstoffkammern 2 angepasst werden. Hierfür ist es notwendig, den Verlauf der die Dämmstoffkammern 2 begrenzenden Stege 8 zu bestimmen. Zum Erfassen der Stegverläufe ist die Einblasplatte 1 auf ihrer Unterseite, bevorzugt zwischen der Einblasplatte 1 und der Decklage 6, mit zwei Scharen von Folienpotentiometern 9 und 10 versehen, von denen die Folienpotentiometer 9 der einen Schar parallel zur Breitseite der Einblasplatte 1 ausgerichtet sind und die Folienpotentiometer 10 der anderen Schar quer dazu verlaufen. Aufgrund dieser gegenüber der Einblasplatte 1 ausgerichteten Anordnung der Folienpotentiometer 9 und 10 können insbesondere unter der Voraussetzung, dass die zu befüllenden Dämmstoffkammern 2 eine rechtwinkelige Grundfläche aufweisen, einfache konstruktive Voraussetzungen zum Bestimmen des Verlaufs der Stege 8 der zu befüllenden Dämmstoffkammern 2 sichergestellt werden.

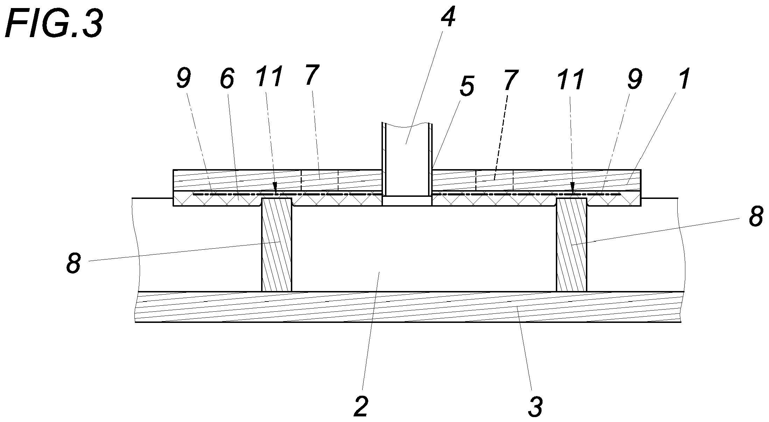

Wie insbesondere der Fig. 3 entnommen werden kann, werden die Folienpotentiometer 9 und 10 beim Aufsetzen der Einblasplatte 1 auf die zu befüllenden Dämmstoffkammern 2 einer Druckbelastung durch die Stirnseiten der Stege 8 der Dämmstoffkammern 2 ausgesetzt, was durch die Folienpotentiometer 9, 10 erfassbare Messpunkte 11 zur Folge hat. Diese Messpunkte 11 werden einer Auswerteeinheit übermittelt, die anhand dieser Messpunkte 11 die Umrisse der zu befüllenden Dämmstoffkammern 2 bestimmt. Aufgrund der Voraussetzung rechtwinkeliger Dämmstoffkammern 2 genügt es ja, den Verlauf der Stege 8 in einer Richtung durch wenigstens zwei Messpunkten 11 zu erfassen, um dann den Verlauf der quer dazu ausgerichteten Stege 8 mithilfe zumindest eines Messpunktes 11 festlegen zu können. Da die Höhe der Stege 8 der Dämmstoffkammern 2 bekannt ist, kann über die ermittelte Grundfläche der Dämmstoffkammern das Kammervolumen und in Abhängigkeit vom Kammervolumen die Füllmenge an Dämmstoff für die jeweiligen Dämmstoffkammern vorgegeben werden.

Da für die Bestimmung des Stegverlaufs der einzelnen Dämmstoffkammern 2 kein gesonderter Messvorgang erforderlich ist, bevor die Einblasplatte 1 auf die zu befüllenden Dämmstoffkammern 2 aufgesetzt wird, ergeben sich besonders vorteilhafte Bedingungen zur Befüllung der Dämmstoffkammern 2 mit dem einzublasenden Dämmstoff, weil mit dem Aufsetzen der Einblasplatte 1 auf das Wandelement 3 die Umrisse der zu befüllenden Dämmstoffkammern 2 erfasst und in Abhängigkeit vom ermittelten Stegverlauf die jeweilige Füllmenge an Dämmstoff vorgegeben werden kann, der dann in die Dämmstoffkammern 2 durch die Einblasöffnungen 5 eingeblasen wird, die innerhalb eines geschlossenen Stegverlaufs liegen.

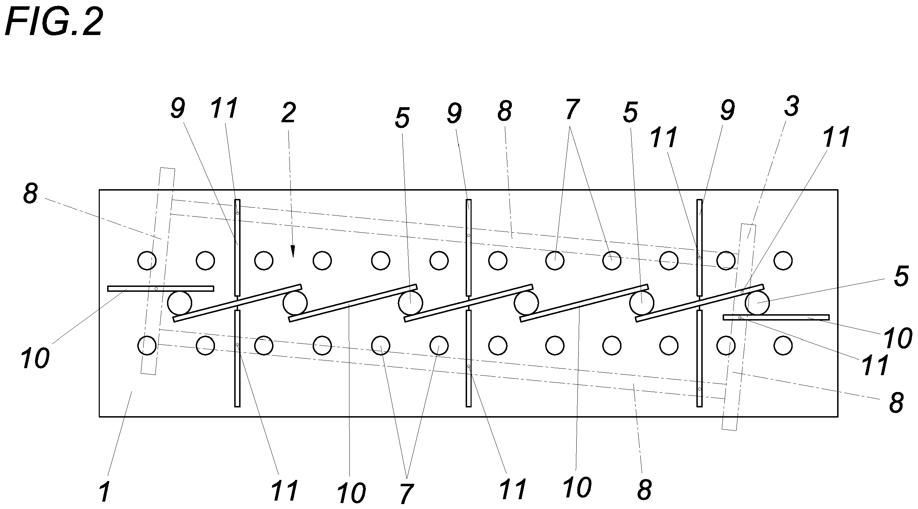

Wie der Fig. 2 entnommen werden kann, muss die Einblasplatte 1 nicht zwangsläufig gegenüber den zu befüllenden Dämmstoffkammern 2 ausgerichtet sein. Eine Winkelabweichung wird durch den Verlauf eines Stegs 8 anhand wenigstens zweier Messpunkte 11 eindeutig festgelegt und kann bei rechtwinkeligen Grundflächen der Dämmstoffkammern 2 als Basis für die Ausrichtung der Dämmstoffkammern 2 gegenüber der Einblasplatte 1 herangezogen werden.

## Patentansprüche

1. Vorrichtung zum Einblasen von Dämmstoff in einseitig offene Dämmstoffkammern (2) eines Wandelements (3) mit einer zumindest eine Dämmstoffkammer (2) abdeckenden Einblasplatte (1), die auf der den Dämmstoffkammern (2) zugekehrten Unterseite eine luftdurchlässige Decklage (6) mit wenigstens einer Einblasöffnung (5) für den Dämmstoff aufweist, und mit einer an eine Auswerteeinheit angeschlossenen Erfassungseinrichtung für den Verlauf der die Dämmstoffkammern (2) umfangsseitig begrenzenden Stege (8), **dadurch gekennzeichnet, dass** die Erfassungseinrichtung für den Stegverlauf der Dämmstoffkammern (2) wenigstens zwei Scharen von auf der Unterseite der Einblasplatte (1) vorgesehenen Folienpotentiometern (9, 10) umfasst, die scharenweise in unterschiedlichen Richtungen verlaufen.

2. Vorrichtung nach Anspruch 1, **dadurch gekennzeichnet, dass** bei einer in ihrer Grundform rechteckigen Einblasplatte (1) eine Schar der Folienpotentiometer (9) parallel zur Breitseite der Einblasplatte (1) und die Folienpotentiometer (10) der anderen Schar quer dazu verlaufen.

3. Vorrichtung nach Anspruch 1 oder 2, **dadurch gekennzeichnet, dass** als luftdurchlässige Decklage (6) eine offenporige Lage aus Weichschaumstoff vorgesehen ist und dass die Folienpotentiometer (9, 10) zwischen der Decklage (6) und der Einblasplatte (1) angeordnet sind.

## Claims

1. Apparatus for blowing insulating material into insulating material chambers (2) of a wall element (3) which are open on one side, comprising a blow-in plate (1) which covers at least one insulating material chamber (2) and has, on the lower side facing the insulating material chambers (2), an air-permeable cover layer (6) with at least one blow-in opening (5) for the insulating material, and comprising a detection device, which is connected to an evaluation unit, for the progression of the webs (8) which define the insulating material chambers (2) on the peripheral side, **characterised in that** the detection device for the web progression of the insulating material chambers (2) comprises at least two sets of film potentiometers (9, 10) which are provided on the lower side of the blow-in plate (1) and the sets of which run in different directions.

2. Apparatus as claimed in claim 1, **characterised in that**, in the case of a blow-in plate (1) which has a rectangular basic shape, one set of the film potentiometers (9) runs in parallel with the broadside of the blow-in plate (1) and the film potentiometers (10) of the other set run transversely thereto.

3. Apparatus as claimed in claim 1 or 2, **characterised in that** an open-pored layer of soft foam material is provided as the air-permeable cover layer (6) and **in that** the film potentiometers (9, 10) are arranged between the cover layer (6) and the blow-in plate (1).

## Revendications

1. Dispositif de soufflage de matériau isolant dans des chambres pour matériau isolant ouvertes sur un côté (2) d'un élément de paroi (3) comprenant une plaque de soufflage (1) qui recouvre au moins une chambre pour matériau isolant (2), qui présente sur le côté inférieur tourné vers les chambres pour matériau isolant (2) une couche de recouvrement perméable à l'air (6) qui comporte au moins une ouverture de soufflage (5) pour le matériau isolant, et comprenant un dispositif de détection raccordé à une unité d'évaluation pour le tracé des nervures (8) qui délimite en périphérie les chambres pour matériau isolant (2), **caractérisé en ce que** le dispositif de détection pour le tracé des nervures des chambres pour matériau isolant (2) comprend au moins deux faisceaux de potentiomètres à feuille (9, 10) prévus sur le côté inférieur de la plaque de soufflage (1), qui s'étendent par groupes dans des directions différentes.

2. Dispositif selon la revendication 1, **caractérisé en ce qu'**avec une plaque de soufflage (1) qui se présente sous la forme d'une base rectangulaire, un faisceau des potentiomètres à feuille (9) s'étend parallèlement au côté de la largeur de la plaque de soufflage (1), et les potentiomètres à feuille (10) de l'autre faisceau s'étendent transversalement à celui-ci.

3. Dispositif selon la revendication 1 ou 2, **caractérisé en ce qu'**une couche à pores ouverts en mousse souple est prévue comme couche de recouvrement perméable à l'air (6), et **en ce que** les potentiomètres à feuille (9, 10) sont disposés entre la couche de recouvrement (6) et la plaque de soufflage (1).
